(19) Europäisches Patentamt
European Patent Office
Office européen des brevets

(11) **EP 1 217 337 B1**

(12) **EUROPÄISCHE PATENTSCHRIFT**

(45) Veröffentlichungstag und Bekanntmachung des Hinweises auf die Patenterteilung:
**28.05.2014   Patentblatt 2014/22**

(51) Int Cl.:
***G01F 25/00*** *(2006.01)*     ***G01F 1/60*** *(2006.01)*

(21) Anmeldenummer: **01126066.8**

(22) Anmeldetag: **02.11.2001**

(54) **Verfahren zur Prüfung des Messbetriebes eines Flüssigkeitmessgerätes**

Method for testing the functioning of a flow measurement device

Méthode pour vérifier le fonctionnement d'un dispositif de mesure du débit

(84) Benannte Vertragsstaaten:
**AT BE CH CY DE DK ES FI FR GB GR IE IT LI LU MC NL PT SE TR**

(30) Priorität: **22.12.2000   DE 10064738**

(43) Veröffentlichungstag der Anmeldung:
**26.06.2002   Patentblatt 2002/26**

(73) Patentinhaber: **KROHNE MESSTECHNIK GMBH & CO. KG**
**47058 Duisburg (DE)**

(72) Erfinder: **Brockhaus, Helmut, Dr.-Ing.**
**46535 Dinslaken (DE)**

(74) Vertreter: **Gesthuysen Patent- und Rechtsanwälte**
**Patentanwälte**
**Postfach 10 13 54**
**45013 Essen (DE)**

(56) Entgegenhaltungen:
**DE-A- 4 122 225     DE-A- 19 606 826**
**DE-A- 19 917 261     GB-A- 2 348 011**

EP 1 217 337 B1

## Beschreibung

Die Erfindung betrifft ein Verfahren zur Prüfung des Meßbetriebs eines magnetisch-induktiven Durchflußmeßgeräts, mit dem der Durchfluß eines leitfähigen Mediums durch eine Leitung gemessen wird, wobei das magnetisch-induktive Durchflußmeßgerät Feldspulen und Meßelektroden aufweist, den Feldspulen ein Feldstrom zugeführt wird, an den Meßelektroden eine in dem leitfähigen Medium induzierte Spannung abgegriffen und gemessen wird und eine Kalibrierung vorgenommen worden ist.

Im Folgenden bedeutet der Begriff Eingangsgröße eine Größe, die im allgemeinen im Meßgerät erzeugt wird und mit zur Bestimmung einer Meßgröße verwendet wird, indem die Eingangsgröße mit der Meßgröße in Wechselwirkung tritt. Aufgrund dieser Wechselwirkung wird - als Meßwert - die Ausgangsgröße generiert. Ein Beispiel, das den zuvor erläuterten Zusammenhang zwischen Meßgröße, Eingangsgröße und Ausgangsgröße illustrieren soll, ist die Bestimmung des Durchflußes eines strömenden Mediums durch eine Leitung mit Hilfe eines magnetisch-induktiven Durchflußmeßgeräts. Dabei ist die Eingangsgröße ein den Feldspulen des magnetisch-induktiven Durchflußmeßgeräts zugeführter Feldstrom. Die Ausgangsgröße ist eine in dem leitfähigen Medium induzierte und an den Meßelektroden abgreifbare Spannung.

Es ist bekannt, Meßgeräte vor bzw. während des Meßbetriebs einem sogenannten Selbsttest zu unterziehen. Bei einem solchen Selbsttest kann zum einen eine Prüfung dahingehend erfolgen, ob alle Komponenten des Meßgeräts voll funktionsfähig sind, und zum anderen dahingehend, ob der Meßbetrieb vorschriftsmäßig abläuft. Ist das Ergebnis eines solchen Selbsttests positiv, liegen also keine Fehlfunktionen des Meßgeräts bzw. des Meßbetriebs vor, so ist gewährleistet, daß das von dem Meßgerät ausgegebene Maßergebnis - natürlich innerhalb vorgegebener Fehlertoleranzen - dem aktuell tatsächlich vorliegenden Wert entspricht.

Im Rahmen eines solchen Selbsttests werden z. B. die Einstelldaten bei der Eingabe auf Plausibilität überprüft. Dabei werden z. B. Eingaben, die außerhalb des zulässigen Bereichs liegen, abgelehnt und nicht übernommen. Unabhängig von der Prüfung der Einstelldaten bei der Eingabe werden die aus den Einstelldaten berechneten Daten, die direkt den Meßbetrieb des Meßgeräts steuern, noch einmal auf ihre erlaubten Grenzen hin überprüft. Diese Überprüfung erfolgt vor Aufnahme des Meßbetriebs, so daß bei Auftreten eines Fehlers bezüglich der Einstelldaten eine Meldung, wie "Fatal Error", ausgegeben und die Messung nicht durchgeführt wird. Einzelne Komponenten und Bauteile des Meßgeräts können z. B. mittels Impedanzmessungen oder Messungen des ohmschen Widerstands bzw. der Leitfähigkeit auf ihre Funktionsfähigkeit hin überprüft werden.

Der Offenlegungsschrift DE 199 17 261 A 1 lässt sich ein Verfahren zur Prüfung eines magnetisch-induktiven Durchflußmeßgeräts entnehmen. Dabei werden die Feldspulen mit einer Spannung beaufschlagt, ohne daß ein Magnetfeld erzeugt wird, und es wird eine Kopplung zwischen der Spulenanordnung und einer Auswerteeinrichtung ermittelt.

Die Offenlegungsschrift DE 41 22 225 A 1 beschreibt eine Schaltungsanordnung zur Ermittlung von Fehlern in einem magnetisch-induktiven Durchflußmeßgerät. Ein Alarm wird dann erzeugt, wenn sich die Beträge der von den Meßelektroden abgegriffenen Signalspannungen oder deren Rauschanteile voneinander unterscheiden oder wenn eine Störung eines Hochfrequenzsignals in einem Kreis auftritt, der die Meßelektroden und einen das Hochfrequenzsignal abgebenden Hochfrequenzgenerator enthält.

Aus der Druckschrift GB 2 348 011 A ergibt sich ein Verfahren zum Prüfen und Kalibrieren eines magnetisch-induktiven Durchflußmeßgeräts. Dabei wird aus zwei Messungen eines sich exponentiell ändernden Feldstroms in einer Feldspule der Wirbelstromwiderstand der Spule ermittelt.

Trotz dieser aus dem Stand der Technik schon bekannten Verfahren für Selbsttests von Meßgeräten besteht ein Bedarf dahingehend, weitere Verfahren für Selbsttests bereitzustellen, mit denen noch genauer festgestellt werden kann, ob eine Fehlfunktion des Meßbetriebs oder des Meßgeräts selbst vorliegt. Insbesondere kann nämlich der Fall auftreten, daß einzelne Komponenten des Meßgeräts nur gering von ihren Sollwerten abweichen, so daß jede einzelne Komponente im Rahmen eines Selbsttests als voll funktionsfähig eingestuft wird, jedoch im Zusammenspiel der Komponenten ein solcher Meßbetrieb generiert wird, der fehlerhaft ist und bei dem die angegebene Genauigkeit der Meßwerte nicht gewährleistet werden kann.

Dementsprechend ist es die Aufgabe der Erfindung, ein solches Verfahren zur Prüfung des Meßbetriebs eines magnetisch-induktiven Durchflußmeßgeräts bereitzustellen, mit dem während des laufenden Meßbetriebs des Meßgeräts Fehlfunktionen sehr genau und auf einfache Weise erfaßt werden können.

Das erfindungsgemäße Verfahren, mit dem die zuvor hergeleitete und aufgezeigte Aufgabe gelöst ist, ist - ausgehend von dem eingangs beschriebenen Verfahren - dadurch gekennzeichnet, daß im Messbetrieb zwischen zwei zeitlichen Perioden 1 und 3 eine Periode 2 eingeschoben wird, innerhalb welcher der den Feldspulen zugeführte Feldstrom bezüglich seiner Amplitude geändert wird, wobei, bei unverändertem Durchfluß, in der Periode 2 ein gleicher Wert für den bestimmten Durchfluß wie in den Perioden 1 bzw. 3 zu erwarten ist, daß die bei geänderten Feldströmen induzierten Spannungen mit den zu erwartenden Spannungen verglichen werden und daß eine Fehlfunktion des magnetisch-induktiven Durchflußmeßgeräts festgestellt wird, wenn die Abweichung der bei den geänderten Feldströmen induzierten Spannungen von den zu erwartenden Spannungen einen Schwellwert übersteigt.

Erfindungsgemäß wird somit die als bekannt vorausgesetzte und für den Meßbetrieb grundlegende Funktion zwischen der Eingangsgröße und der Ausgangsgröße zur Prüfung des Meßbetriebs verwendet. Im einfachsten Fall handelt es sich bei dieser Funktion zwischen der Eingangsgröße und der Ausgangsgröße um eine lineare Funktion, so daß eine Fehlfunktion des Meßbetriebs des Meßgeräts einfach durch ein Abweichen der bei voneinander verschiedenen Eingangsgrößen erzielten Ausgangsgrößen um mehr als einen Schwellwert von einem linearen Verlauf feststellbar ist.

Beim Vergleich der gemessenen Ausgangsgröße mit der für die entsprechende Eingangsgröße erwarteten Ausgangsgröße kann jede Abweichung separat für eine Prüfung herangezogen werden. Gemäß einer bevorzugten Weiterbildung der Erfindung ist jedoch vorgesehen, daß die Abweichung über mehrere - vorzugsweise über wenigstens 100 - Werte gemittelt wird. Auf diese Weise führen einzelne "Ausreißer" bei den Meßwerten für den Ausgangswert nicht gleich dazu, daß - fälschlicherweise - eine Fehlfunktion des Meßbetriebs festgestellt wird. Alternativ ist es möglich, die gemessene Abweichung einer Tiefpassfilterung zu unterziehen. Ferner ist gemäss einer bevorzugten Weiterbildung der Erfindung vorgesehen, dass bei der Feststellung erschwerter Messbedingungen, was z. B. aufgrund einer erhöhten Standardabweichung der gemessenen Abweichung erfasst wird, die Anzahl der Werte, über die die Abweichung mittelbar ist, erhöht wird. Auch diese Maßnahme dient dazu, daß bei stark schwankenden Meßwerten ein fälschlicherweises Feststellen einer Fehlfunktion des Messbetriebs vermieden wird.

Der Schwellwert, bei dessen Übersteigen eine Fehlfunktion des Meßbetriebs des Meßgeräts feststellbar ist, kann auf unterschiedliche Weisen festgelegt sein, z. B. als konstanter absoluter Wert. Gemäß einer bevorzugten Weiterbildung der Erfindung ist jedoch vorgesehen, daß der Schwellwert als prozentualer Anteil vom Meßbereichsendwert für die Ausgangsgröße festgelegt ist. Auf diese Weise läßt es sich erreichen, durch einmaliges Festlegen des Schwellwerts - nämlich als prozentualen Anteil vom Meßbereichsendwert für die Ausgangsgröße - eine Einstellung des Meßgeräts zu erzielen, die für alle einstellbaren Meßbereiche des Meßgeräts verwendbar ist. In diesem Zusammenhang ist es gemäß einer besonders bevorzugten Weiterbildung der Erfindung vorgesehen, daß der prozentuale Anteil vom Meßbereichsendwert für die Ausgangsgröße 1 % oder weniger beträgt.

Bei der Feststellung einer Fehlfunktion des Meßbetriebs des Meßgeräts sind verschiedene Vorgänge möglich, insbesondere kann nämlich der Meßbetrieb des Meßgeräts beendet werden, da ja keine verläßlichen Meßergebnisse mehr erzielt werden. Gemäß einer bevorzugten Weiterbildung der Erfindung ist jedoch vorgesehen, daß bei der Feststellung einer Fehlfunktion des Meßbetriebs eine optische und/oder akustische Warnmeldung ausgebbar ist.

Grundsätzlich ist die Erfindung auf jedes Meßgerät anwendbar, das die eingangs genannten Voraussetzungen erfüllt, nämlich einen solchen Meßbetrieb aufweist, bei dem durch Messen einer Ausgangsgröße als Funktion einer Eingangsgröße ein zu messender Wert bestimmt wird. Besonders vorteilhaft ist das erfindungsgemäße Verfahren jedoch insbesondere für magnetisch-induktive Durchflußmeßgeräte zur Messung des Durchflusses eines leitfähigen Mediums durch eine Leitung hindurch, wobei die Eingangsgröße ein den Feldspulen des magnetisch-induktiven Durchflußmeßgeräts zugeführter Feldstrom ist, die Ausgangsgröße eine in dem leitfähigen Medium induzierte und an den Meßelektroden abgreifbare Spannung ist und eine Fehlfunktion des Meßbetriebs des magnetisch-induktiven Durchflußmeßgeräts feststellbar ist, wenn die Abweichung der bei unterschiedlichen Feldströmen gemessenen induzierten Spannung von einem linearen Spannungsverlauf mehr als den Schwellwert beträgt.

Im einzelnen gibt es nun eine Vielzahl von Möglichkeiten, das erfindungsgemäße Verfahren auszugestalten und weiterzubilden. Dazu wird einerseits auf die dem unabhängigen Patentanspruch nachgeordneten Patentansprüche und andererseits auf die nachfolgende detaillierte Beschreibung eines bevorzugten Ausführungsbeispiels der Erfindung unter Bezugnahme auf die Zeichnung verwiesen. In der Zeichnung zeigt

Fig. 1    schematisch den Aufbau eines magnetisch-induktiven Durchflußmeßgerät gemäß einem bevorzugten Ausführungsbeispiel der Erfindung und

Fig. 2    schematisch den Verlauf von Eingangsgröße, Ausgangsgröße und ermittelter Abweichung der gemessenen Ausgangsgröße von der erwarteten Ausgangsgröße.

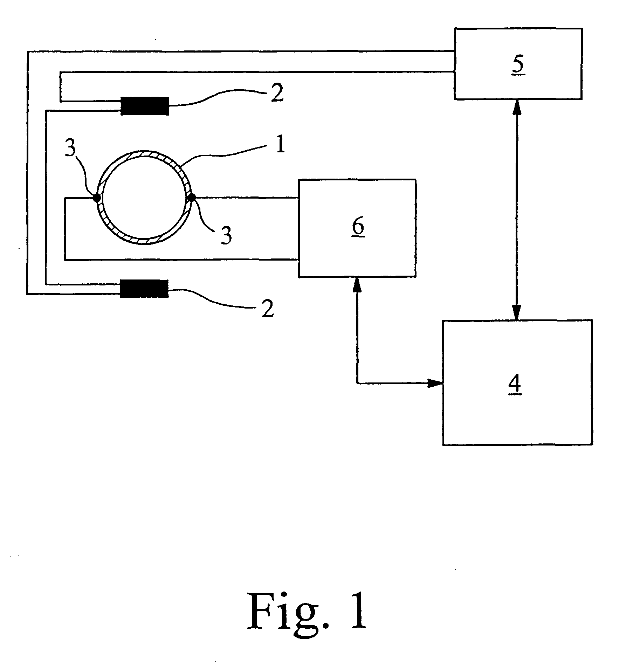

Das im folgenden beschriebene bevorzugte Ausführungsbeispiel der Erfindung betrifft ein Verfahren zur Prüfung des Meßbetriebs eines magnetisch-induktiven Durchflußmeßgeräts. Aus Fig. 1 ist schematisch der Aufbau des magnetisch-induktiven Durchflußmeßgeräts gemäß dem bevorzugten Ausführungsbeispiel der Erfindung ersichtlich. Das magnetisch-induktive Durchflußmeßgerät weist eine Leitung 1 auf, durch die ein nicht weiter dargestelltes leitfähiges Medium hindurch strömt. Mit zwei Feldspulen 2 wird ein Magnetfeld erzeugt, das die Leitung 1 und somit auch das durch die Leitung 1 strömende Medium durchsetzt. An der Leitung 1 sind in dem Bereich, in dem das Magnetfeld diese durchsetzt, zwei Meßelektroden 3 vorgesehen, mit denen eine in dem Medium induzierte Spannung abgegriffen werden kann.

Das grundlegende Prinzip eines magnetisch-induktiven Durchflußmeßgeräts für strömende Medien geht bereits auf Faraday zurück, der im Jahre 1832 vorgeschlagen hat, das Prinzip der elektrodynamischen Induktion zur Strömungsgeschwindigkeitsmessung zu verwenden. Nach dem Faradayschen Induktionsgesetz entsteht in einem strömenden Medium, das Ladungsträger mit sich führt und durch ein Magnetfeld hindurch fließt, eine elektrische Feldstärke senkrecht zur Strömungsrichtung und senkrecht zum Magnetfeld. Dieses Gesetz wird bei dem magnetisch-induktiven Durchflußmeßgerät dadurch genutzt, daß der Magnet, bestehend aus den Feldspulen 2, in der Leitung 1 ein Magnetfeld erzeugt, das senkrecht zur Strömungsrichtung verläuft. Innerhalb dieses Magnetfelds liefert jedes sich durch das Magnetfeld hindurch bewegende Volumenelement des strömenden Mediums mit der in diesem Volumenelement entstehenden Feldstärke einen Beitrag zu der über die Meßelektroden 3 abgegriffenen Meßspannung. Die Meßelektroden 3 sind bei den bekannten magnetisch-induktiven Durchflußmeßgeräten derart ausgeführt, daß sie entweder galvanisch oder kapazitiv mit dem strömenden Medium gekoppelt sind. Ein besonderes Merkmal der magnetisch-induktiven Durchflußmeßgeräte ist die Proportionalität zwischen der Meßspannung und der über den Querschnitt der Leitung 1 gemittelten Strömungsgeschwindigkeit des Medium. Außerdem besteht auch zwischen dem Feldstrom für die Feldspulen 2 bzw. dem mit den Feldspulen 2 erzeugten Magnetfeld einerseits und der in dem leitfähigen Medium induzierten Spannung andererseits eine im wesentlichen lineare Funktion.

Somit stellen der Feldstrom mittelbar und das Magnetfeld unmittelbar die Eingangsgrößen des Meßbetriebs dar. Als Ausgangsgröße wird die in dem leitfähigen Medium induzierte Spannung gemessen, die über die beiden Meßelektroden 3 abgegriffen wird. Zwischen dem Magnetfeld und der induzierten Spannung besteht, wie schon ausgeführt, Proportionalität, so daß die in dem leitfähigen Medium induzierte Spannung - als Ausgangswert - in Abhängigkeit von verschiedenen Magnetfeldern bzw. Feldströmen - als Eingangswerten - einem linearen Spannungsverlauf folgt.

Bei dem magnetisch-induktiven Durchflußmeßgerät gemäß dem bevorzugten Ausführungsbeispiel der Erfindung sind ein Mikrokontroller 4, eine Feldspulenversorgung 5 und ein A/D-Wandler 6 vorgesehen. Der Mikrokontroller 4 ist für die gesamte Steuerung des magnetisch-induktiven Durchflußmeßgeräts sowie dessen Meßbetriebs verantwortlich, und die Feldspulenversorgung 5 übernimmt die Versorgung der Feldspulen 2 mit dem Feldstrom. Der A/D-Wandler 6 ist zwischen den Meßelektroden 3 und dem Mikrokontroller 4 vorgesehen, erhält als Eingangssignal die in dem leitfähigen Medium induzierte und an den Meßelektroden 3 abgegriffene Spannung und gibt einen dieser Spannung entsprechenden digitalisierten Wert an den Mikrokontroller 4 aus. Die Feldspulenversorgung 5 ist ebenfalls mit dem Mikrokontroller 4 verbunden, nämlich zur Steuerung bzw. Regelung der Feldspulenversorgung 5, d. h. des von der Feldspulenversorgung 5 an den Feldstrom 2 gelieferten Feldstroms, oder, wenn die Steuerung bzw. Regelung des Feldstroms in der Feldspulenversorgung 5 selbst erfolgt, zur Übermittlung des gegenwärtig fließenden Feldstroms.

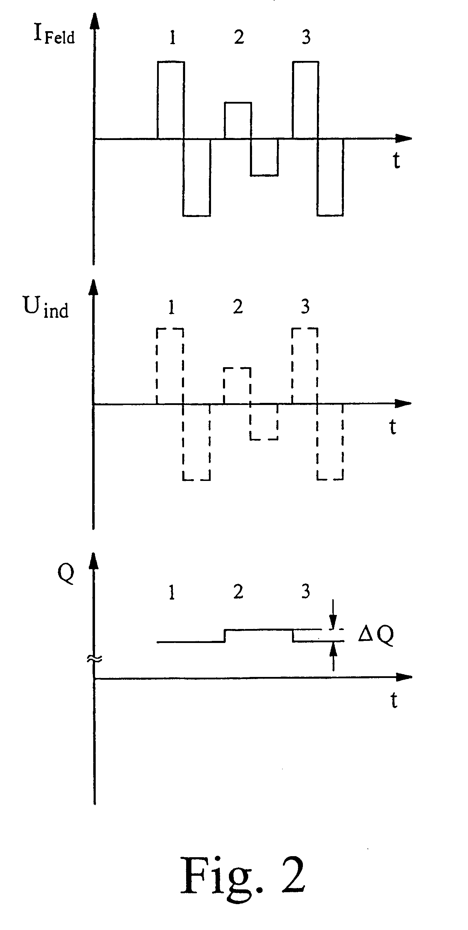

Im Meßbetrieb wird nun so vorgegangen, daß, wie aus Fig. 2 schematisch ersichtlich, alternierender Gleichstrom als Feldstrom verwendet wird. Zwischen zwei Perioden des Feldstroms $I_{Feld}$ mit voller Amplitude, vorliegend 100 mA und in Fig. 2 mit 1 bzw. 3 bezeichnet, wird regelmäßig, z. B. alle 5 s, eine in Fig. 2 mit 2 bezeichnete Periode eingeschoben, deren Amplitude nur die Hälfte beträgt, also 50 mA. Aufgrund dieses um die Hälfte verringerten Feldstroms wird in dieser Periode auch die in dem elektrisch leitfähigen Medium induzierten Spannung $U_{ind}$ nur halb so groß. Da für den Durchfluß Q

$$Q = \frac{U_{ind}}{I_{Feld}} \cdot \text{Konstante}$$

gilt, die induzierte Spannung also in einem linearen Abhängigkeitsverhältnis zum Feldstrom steht, würde man theoretisch bei tatsächlich unverändertem Durchfluß Q in der Periode 2 einen gleichen Wert für den bestimmten Durchfluß, wie in den Perioden 1 bzw. 3, erwarten. Jedoch wird man typischerweise eine Differenz ΔQ zwischen dem in der Periode 2 ermittelten Durchfluß und den in der Periode 1 bzw. 3 ermittelten Durchflüssen messen, wobei diese Differenz ΔQ im allgemeinen von Toleranzen bzw. Fehlfunktionen der einzelnen Komponenten des magnetisch-induktiven Durchflußmeßgeräts herrührt.

Wenn auch gemäß dem vorliegend beschriebenen bevorzugten Ausführungsbeispiel der Erfindung eine Verringerung der Amplitude des Feldstroms und somit auch des Magnetfelds um 50 % erfolgt, so sind auch andere periodische Veränderungen des Feldstroms und somit des Magnetfelds möglich. Insbesondere kann der Feldstrom nicht nur periodisch verringert sondern auch periodisch erhöht werden, wobei vorzugsweise eine Verringerung bzw. eine Erhöhung um wenigstens 20 % erfolgen soll.

Für die Funktionsweise der Erfindung ist es auch nicht erforderlich, daß die Veränderungen des Feldstroms und somit des Magnetfelds periodisch erfolgen. Lediglich der einfachen Realisierbarkeit halber ist bei dem vorliegend beschriebenen bevorzugten Ausführungsbeipiel der Erfindung vorgesehen, daß die Veränderung des Feldstroms und somit des Magnetfelds periodisch erfolgt und für eine ganzzahliges Vielfaches einer Halbperiode des Feldstroms aufrechterhalten wird. Die Einstellungen des Selbsttestbetriebs werden dabei vorzugsweise so gewählt, daß die Veränderung für zwei oder drei Halbperioden des Feldstroms aufrechterhalten wird.

Die in Rede stehende Prüfung, also das Einschieben einer Periode mit einem Feldstrom mit verringerter Amplitude, vorliegend mit halber Amplitude, wird gemäß dem bevorzugten Ausführungsbeispiel der Erfindung alle 5 s durchgeführt. Die Differenz ΔQ der jeweils ermittelten Durchflüsse wird über 100 solche Prüfungen gemittelt. Ergibt sich nun, daß dieser gemittelte Wert größer als 1 % vom Meßbereichsendwert für den Durchfluß Q ist, so wird von dem magnetisch-induktiven Meßgerät eine Warnung "Linearität" ausgegeben. Gemäß dem hier beschriebenen Ausführungsbeispiel der Erfindung ist vorgesehen, daß diese Warnung sowohl optisch als auch akustisch ausgegeben werden kann. Die Ausgabe dieser Warnung deutet auf folgende mögliche Fehler hin: eine Nichtlinearität im A/D-Wandler 6, eine Nichtlinearität im Stromkreis der Feldspulen 2, ein Defekt in den Feldspulen 2, in der Auskleidung der Leitung 1 oder an den Meßelektroden 3, eine falsche Einstellung der Kalibrierwerte und/oder ein Nullpunktfehler des A/D-Wandlers 6. Gemäß dem bevorzugten Ausführungsbeispiel der Erfindung wird also der gesamte Meßkreis, umfassend die Meßelektroden 3, die Feldspulenversorgung 5 und den A/D-Wandler 6, einem Selbsttest unterzogen.

Der Zusammenhang zwischen dem den Feldspulen 2 zugeführten Feldstrom und dem von den Feldspulen 2 erzeugten Mangetfeld ist im wesentlichen linear. Jedoch weist auch dieser Zusammenhang unter Umständen gewisse Nichtliniäritäten auf, so daß gemäß dem bevorzugten Ausführungsbeispiel der Erfindung vorgesehen ist, daß für den veränderten Feldstrom, vorliegend also für den um die Hälfte verringerten Feldstrom, eine Kalibrierung durchgeführt wird. Diese Kalibrierung des magnetisch-induktiven Durchflußmeßgeräts gemäß dem bevorzugten Ausführungsbeispiel der Erfindung ist bei der Herstellung des Geräts im Herstellungswerk durchgeführt worden.

Neben der weiter oben beschriebenen Mittelwertbildung über wenigstens 100 Prüfungen, die im übrigen vorzugsweise als gleitende Mittelwertbildung realisiert ist, ist zur Weiterverarbeitung der Prüfergebnisse auch eine Tiefpaßfilterung im Mikrokontroller 4 möglich. Im Mikrokontroller 4 wird ferner die Standardabweichung der Prüfungen bestimmt, so daß bei hoher Unsicherheit der Meßergebnisse, also bei einer großen Standardabweichung der Prüfungen, die Anzahl der Mittelungen der Prüfungen automatisch erhöht werden kann, um keine Fehlalarme auszulösen.

**Patentansprüche**

1. Verfahren zur Überprüfung des Messbetriebs eines magnetisch-induktiven Durchflussmessgeräts, mit dem der Durchfluss eines leitfähigen Mediums durch eine Leitung (1) gemessen wird, wobei das magnetisch-induktive Durchflussmessgerät Feldspulen (2) und Messelektroden (3) aufweist, den Feldspulen (2) ein Feldstrom zugeführt wird, an den Messelektroden (3) eine in dem leitfähigen Medium induzierte Spannung abgegriffen und gemessen wird und eine Kalibrierung vorgenommen worden ist, **dadurch gekennzeichnet,**

**dass** im Messbetrieb zwischen zwei zeitlichen Perioden 1 und 3 eine Periode 2 eingeschoben wird, innerhalb welcher der den Feldspulen (2) zugeführte Feldstrom bezüglich seiner Amplitude geändert wird, wobei, bei unverändertem Durchfluss, in der Periode 2 ein gleicher Wert für den bestimmten Durchfluss wie in den Perioden 1 bzw. 3 zu erwarten ist, dass die bei geänderten Feldströmen induzierten Spannungen mit den zu erwartenden Spannungen verglichen werden und dass eine Fehlfunktion des magnetisch-induktiven Durchflussmessgeräts festgestellt wird, wenn die Abweichung der bei den geänderten Feldströmen induzierten Spannungen von den zu erwartenden Spannungen einen Schwellwert übersteigt.

2. Verfahren nach Anspruch 1, **dadurch gekennzeichnet, dass** der Feldstrom periodisch geändert wird.

3. Verfahren nach Anspruch 1 oder 2, **dadurch gekennzeichnet, dass** der Feldstrom wenigstens um 20 % geändert wird.

4. Verfahren nach einem der Ansprüche 1 bis 3, **dadurch gekennzeichnet, dass** die Abweichung über mehrere - vorzugsweise über wenigstens 100 - Werte gemittelt wird.

5. Verfahren nach Anspruch 4, **dadurch gekennzeichnet, dass** die Standardabweichung der gemessenen Abweichung bestimmt wird und, falls die Standardabweichung einen vorbestimmten Wert übersteigt, die Anzahl der Werte, über die die Abweichung gemittelt wird, erhöht wird.

6. Verfahren nach einem der Ansprüche 1 bis 5, **dadurch gekennzeichnet, dass** der Schwellwert als prozentualer Anteil vom Messwert für die induzierte Spannung festgelegt ist.

7. Verfahren nach Anspruch 6, **dadurch gekennzeichnet, dass** der prozentuale Anteil 1 % oder weniger vom Messbereichsendwert beträgt.

8. Verfahren nach einem der Ansprüche 1 bis 7, **dadurch gekennzeichnet, dass** bei der Feststellung einer Fehlfunktion eine optische und/oder akustische Warnmeldung ausgegeben wird.

**Claims**

1. Method for testing the measuring operation of a magnetoinductive flowmeter, with which the flow of a conductive medium through a conduit (1) is measured, wherein the magnetoinductive flowmeter has field coils (2) and measuring electrodes (3), a field current is supplied to the field coils (2), a voltage induced in the conductive medium is sampled and measured in the measuring electrodes (3) and a calibration takes place **characterized in that** a period 2 is inserted between two temporal periods 1 and 3, within which the field current supplied to the field coils (2) is changed in respect to its amplitude, wherein, in an unchanged flow, the same value for the determined flow is expected in period 1 as in periods 1 or 3, that the voltages induced by the changed field currents are compared with the expected voltages and that an error of the magnetoinductive flowmeter is determined when the deviation of the voltages induced by the changed field currents from the expected voltages exceeds a threshold value.

2. Method according to claim 1, **characterized in that** the field current is periodically changed.

3. Method according to claim 1 or 2, **characterized in that** the field current is changed by at least 20 %.

4. Method according to any one of claims 1 to 3, **characterized in that** the deviation is averaged over many - preferably over at least 100 - values.

5. Method according to claim 4, **characterized in that** the standard deviation of the measured deviation is determined and, if the standard deviation exceeds a predetermined value, the number of values used for determining the deviation is increased.

6. Method according to any one of claims 1 to 5, **characterized in that** the threshold value is set as a percentage of the measured value for the induced voltage.

7. Method according to claim 6, **characterized in that** the percentage is 1 % or less of the measuring range end value.

8. Method according to any one of claims 1 to 7, **characterized in that** an optical or acoustic alarm signal is given when an error is determined.


**Revendications**

1. Procédé de vérification du fonctionnement de mesure d'un appareil de mesure magnétique-inductive de débit par lequel le débit d'un fluide conducteur dans un conduit (1) est mesuré, l'appareil de mesure magnétique-inductive de débit présentant des bobines de champ (2) et des électrodes de mesure (3), un courant de champ étant apporté aux bobines de champ (2), une tension induite dans le fluide conducteur étant détectée sur les électrodes de mesure (3) et mesurées et un étalonnage ayant été réalisé, **caractérisé en ce que** en fonctionnement de mesure, une période 2 au cours de laquelle l'amplitude du courant de champ apporté aux bobines de champ (2) est modifiée est insérée entre deux périodes temporelles 1 et 3, et en cas de débit constant, une même valeur de débit est attendue au cours de la période 2 que celle déterminée au cours des périodes 1 et 3, **en ce qu'**en cas de modification des courants de champ, les tensions induites sont comparées aux tensions attendues et **en ce qu'**un fonctionnement défectueux de l'appareil de mesure magnétique-inductive de débit est constaté si l'écart entre les tensions induites lors de courants de champ modifiés par rapport aux tensions attendues dépasse une valeur de seuil.

2. Procédé selon la revendication 1, **caractérisé en ce que** le courant de champ est modifié périodiquement.

3. Procédé selon les revendications 1 ou 2, **caractérisé en ce que** le courant de champ est modifié d'au moins 20 %.

4. Procédé selon l'une des revendications 1 à 3, **caractérisé en ce que** la moyenne de l'écart est calculée sur plusieurs valeurs, de préférence sur au moins 100 valeurs.

5. Procédé selon la revendication 4, **caractérisé en ce que** l'écart-type de l'écart mesuré est déterminé et au cas où l'écart-type dépasse une valeur prédéterminée, le nombre des valeurs sur lesquelles la moyenne de l'écart est déterminée est augmenté.

6. Procédé selon l'une des revendications 1 à 5, **caractérisé en ce que** la valeur de seuil est définie comme pourcentage de la valeur de mesure de la tension induite.

7. Procédé selon la revendication 6, **caractérisé en ce que** le pourcentage est de 1 % ou moins de la valeur finale de la plage de mesure.

8. Procédé selon l'une des revendications 1 à 7, **caractérisé en ce que** lorsqu'un fonctionnement défectueux est constaté, un avertissement optique et/ou acoustique est émis.

# Fig. 1

Fig. 2

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19917261 A1
- DE 4122225 A1

- GB 2348011 A